# EUROPÄISCHE PATENTSCHRIFT

(11) **EP 1 532 378 B1**
(45) Veröffentlichungstag und Bekanntmachung des Hinweises auf die Patenterteilung: **20.06.2007**
(21) Anmeldenummer: 03794930.2
(22) Anmeldetag: 23.08.2003
(51) Int. Cl.: F16D 1/072

(54) **WELLE-NABE-VERBINDUNG**
SHAFT-HUB CONNECTION
LIAISON ARBRE-MOYEU

(30) Priorität: 28.08.2002 DE 10239393
(43) Veröffentlichungstag der Anmeldung: 25.05.2005
(73) Patentinhaber: ZF FRIEDRICHSHAFEN AG, 88038 Friedrichshafen (DE)
(72) Erfinder: SCHULZ, Horst, 88045 Friedrichshafen (DE); KIRSCHNER, Tino, 88097 Eriskirch (DE); BUCHMANN, Roland, 88046 Friedrichshafen (DE)
(86) Internationale Anmeldenummer: PCT/EP2003/009372
(87) Internationale Veröffentlichungsnummer: WO 2004/025131

(56) Entgegenhaltungen:
- EP-A- 0 661 474
- DE-A- 2 333 040
- DE-A- 4 134 552

## Beschreibung

Die Erfindung betrifft eine Welle-Nabe-Verbindung nach dem Oberbegriff des Patentanspruches 1, bekannt durch die EP-B 0 784 758.

Die aus der EP-B 0 784 758 bekannte Welle-Nabe-Verbindung besteht aus einem drei Abschnitte aufweisenden Wellenende, welches in eine dreistufige Bohrung einer Nabe; d. h. mit drei Bohrungsabschnitten unterschiedlichen Durchmessers eingesetzt ist. Der mittlere Wellenabschnitt weist eine Verzahnung auf, die sich beim axialen Fügen beider Teile in den mittleren Bohrungsabschnitt eingräbt und somit einen Formschluss zwischen Welle und Nabe herstellt. Die beiden benachbarten Wellenabschnitte, so genannte Zentrierabschnitte, bilden mit den entsprechenden Bohrungsabschnitten der Nabe jeweils eine Fügepassung. Der in Fügerichtung hintere Zentrierabschnitt und der verzahnte Wellenabschnitt können denselben Durchmesser aufweisen oder- wie aus der EP-B 661 474 bekannt - unterschiedliche Durchmesser haben. Nachteilung bei den bekannten Wellenbefestigungen ist der herstellungstechnische Aufwand, insbesondere für die mit einer dreistufigen Bohrung ausgebildete Nabe, wobei jede Bohrung als Passbohrung noch zusätzlichen Fertigungsaufwand erfordert.

Es ist Aufgabe der vorliegenden Erfindung, eine Welle-Nabe-Verbindung der eingangs genannten Art darzustellen, die bei gleicher Pass- bzw. Zentriergenauigkeit mit geringeren Kosten herstellbar ist.

Diese Aufgabe wird durch eine Welle-Nabe-Verbindung mit den Merkmalen des Patentanspruches 1 gelöst. Der wesentliche Vorteil der erfindungsgemäßen Wellenbefestigung besteht darin, dass die Nabe nur noch zwei Bohrungsabschnitte unterschiedlichen Durchmessers aufweist, d. h. lediglich eine Zwei-Stufenbohrung - im Gegensatz zu der Drei-Stufenbohrung nach dem Stand der Technik. Diese wesentliche herstellungstechnische Vereinfachung der Nabenbohrung ergibt sich aus der durch die Erfindung gewonnene Erkenntnis, dass der Bohrungsdurchmesser für den vorderen Zentrierabschnitt derselbe Durchmesser ist, in welchen sich die Verzahnung des mittleren Wellenabschnittes eingräbt. Damit wird bei gleicher Zentriergenauigkeit wie beim Stand der Technik eine wesentlich einfacher und damit auch kostengünstiger herstellbare Nabenbohrung erreicht.

Nach vorteilhaften Weiterbildungen der Erfindung gemäß Anspruch 2 und 3 ist zwischen dem verzahnten Wellenabschnitt und dem in Fügerichtung vorne liegenden Zentrierabschnitt ein weiterer Abschnitt mit geringerem Durchmesser vorgesehen, der dem Fußkreisdurchmesser der Rändelverzahnung des verzahnten Abschnittes entspricht. Dadurch ergibt sich der Vorteil einer einfacheren Herstellung der Rändelverzahnung durch ein Rändelwerkzeug, welches einfacher zugestellt werden kann.

Nach einer weiteren Ausgestaltung der Erfindung gemäß Anspruch 4 geht der in Fügerichtung hinten liegende Zentrierabschnitt in einen Wellenbund über, der als Anschlagfläche gegenüber der Stirnseite der Nabe beim Fügen von Welle und Nabe dient. Dies ergibt eine kurze axiale Bautiefe für den Wellenabschnitt.

Ein Ausführungsbeispiel der Erfindung ist in der Zeichnung dargestellt und wird im Folgenden näher beschrieben.
Es zeigen:
- Fig. 1: eine Welle-Nabe-Verbindung in zusammengebautem Zustand,
- Fig. 2: einen Wellenabschnitt der Welle-Nabe-Verbindung nach Fig. 1,
- Fig. 2a: eine Seitenansicht auf den Wellenabschnitt mit Ritzel und
- Fig. 3: die Nabe der Welle-Nabe-Verbindung nach Fig. 1.

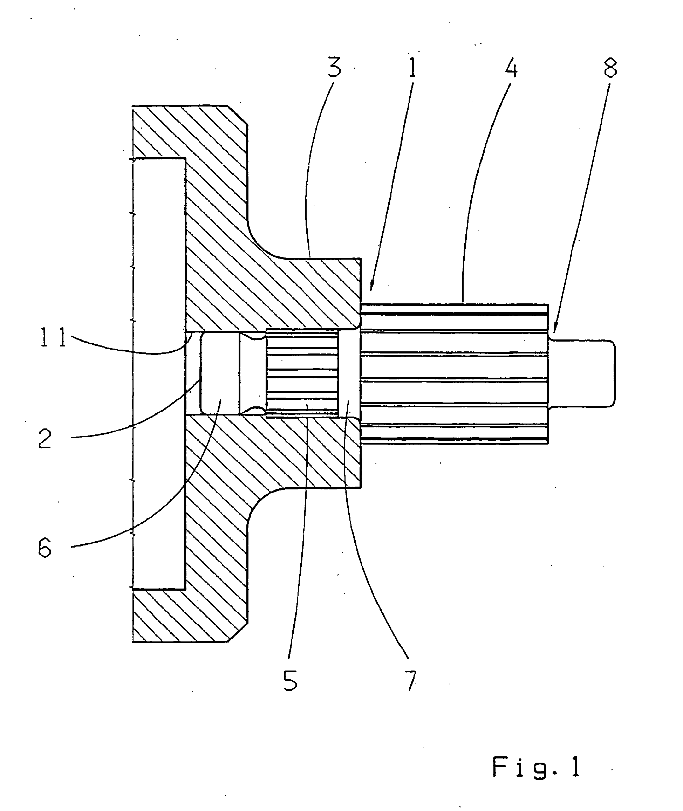

Fig. 1 zeigt eine Welle-Nabe-Verbindung 1 zwischen einem Wellenabschnitt 2 und einer Nabe 3 eines nicht näher dargestellten Getriebeteils. Der Wellenabschnitt 2, der einstückig mit einem Ritzel 4 verbunden ist, bildet mit der Nabe 3 eine formschlüssige Verbindung mittels einer Wellenverzahnung 5, die sich beim Fügen des Wellenabschnittes 2 in die Nabe 3 einschneidet. Beiderseits des verzahnten Wellenabschnittes 5 befinden sich Zentrierabschnitte 6, 7. Das Ritzel 4 und der Wellenabschnitt 2 bilden eine Ritzelwelle 8, die Teil eines nicht dargestellten Getriebes ist.

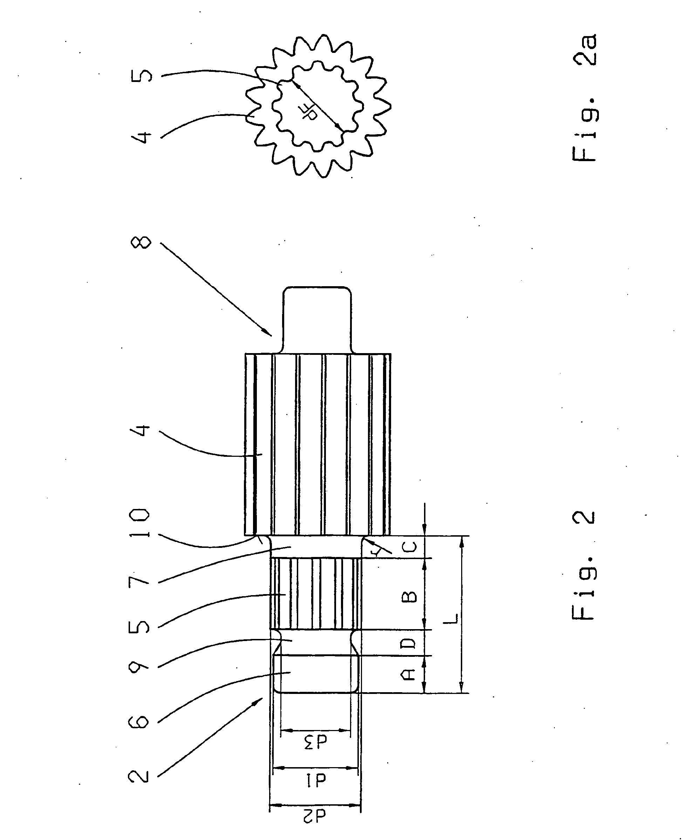

Fig. 2 zeigt die Ritzewelle 8 aus Fig. 1 als Einzelteil mit dem Wellenabschnitt 2, der eine axiale Erstreckung L aufweist. Der Wellenabschnitt 2 weist vier Abschnitte auf, nämlich den vorderen Zentrierabschnitt 6 der Breite A, den mittleren verzahnten Abschnitt 5 der Breite B, den in Fügerichtung hinteren Zentrierabschnitt 7 der Breite C sowie einen Einstich 9 der Breite D. Die Abschnitte 5, 7 der Breite B plus C weisen denselben Außendurchmesser d2 auf. Der vordere Zentrierabschnitt der Breite A weist einen geringeren Durchmesser d1 auf. Zwischen dem verzahnten Abschnitt B und dem vorderen Zentrierabschnitt A ist der Einstich 9 D mit einem Durchmesser d3 angeordnet, der kleiner als d1 ist - er entspricht dem Fußkreisdurchmesser dF, wie er in einer Seitenansicht in Fig. 2a eingezeichnet ist. Die Verzahnung des Abschnittes 5 ist eine Rändelverzahnung, die durch ein Rollenwerkzeug hergestellt wird. Die Verzahnung 5 läuft mit ihrem Zahnfußbereich in den Abschnitt D hinein, wodurch die Herstellung der Rändelverzahnung erleichtert wird. Der in Fügerichtung hinten liegende Zentrierabschnitt 7 geht mit einem Radius r in einen Wellenbund 10 über, der die Stirnfläche des Ritzels 4 bildet.

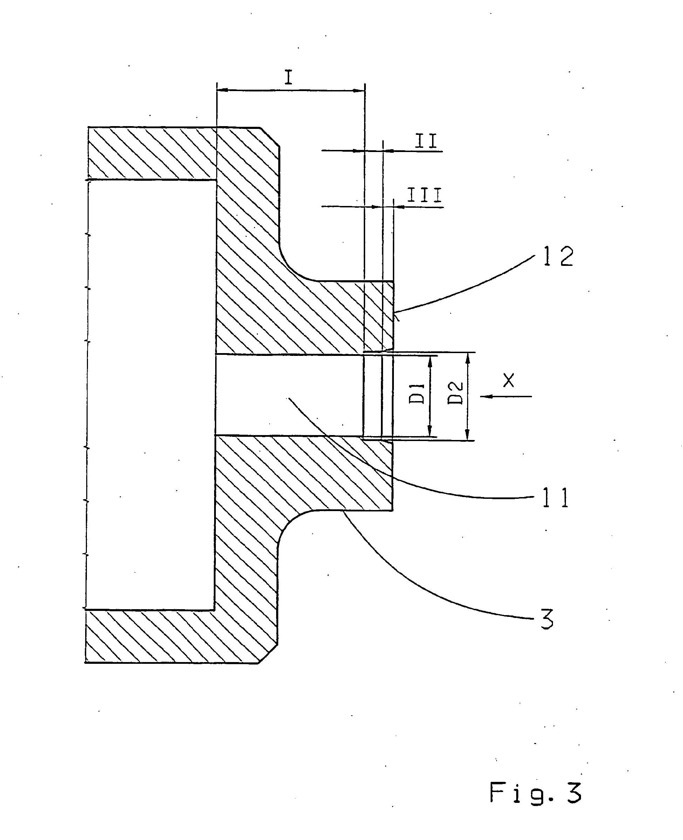

Fig. 3 zeigt die Nabe 3 mit einer Bohrung 11 als Einzelteil. Die Bohrung 11 weist zwei Bohrungsabschnitte auf, nämlich einen ersten Bohrungsabschnitt I mit einem Durchmesser D1 und einen zweiten Bohrungsabschnitt II mit einem gegenüber D1 größeren Durchmesser D2. An den zylindrischen Bohrungsabschnitt II schließt sich ein Fasenabschnitt III an, um die äußere Bohrungskante zu brechen.

Die Durchmesser d1, d2 des Wellenabschnittes 2 und die Durchmesser D1 und D2 der Bohrung 11 sind in der Weise aufeinander abgestimmt, dass d1 für den Wellenabschnitt 6 mit D1 im Bohrungsabschnitt I sowie d2 im Abschnitt 7 mit D2 im Bohrungsabschnitt II Fügepassungen ergeben, d. h. einen Gleit-, Schiebe- oder Haftsitz. Der Durchmesser d2 des verzahnten Wellenabschnittes 5 ist größer als der Bohrungsdurchmesser D1 - daher schneidet sich die Verzahnung des Abschnittes 5 über eine Breite B in den Bohrungsabschnitt I ein.

Das Fügen der Teile 8 bzw. 2 und 3 erfolgt in der Weise, dass die Ritzelwelle 8 zunächst koaxial mit der Bohrung 11 ausgerichtet und dann in axialer Richtung X in die Bohrung 11 eingeführt wird. Dabei übernimmt zunächst der in Fügerichtung vorne liegende Abschnitt 6 mit dem Durchmesser d1 die Zentrierung, bis der verzahnte Abschnitt 5 zunächst den Bohrungsabschnitt II sowie anschließend den Bohrungsabschnitt I erreicht und dann ein Gegenprofil in die Nabe 3 einschneidet. Schließlich kommt der Bund 10 der Ritzelwelle 8 in Anschlag mit der Stirnfläche 12 der Nabe 3, und der Fügevorgang ist beendet. Der Zentrierabschnitt 7 liegt dann in dem Bohrungsabschnitt II und bildet mit dem Durchmesser D2 eine Fügepassung. Der Radius r des Abschnitts 7 liegt dabei aufgrund des Fasenabschnittes III frei. Durch die Zentrierabschnitte 6, 7 beiderseits des verzahnten Wellenabschnittes 5 ergibt sich für die Ritzelwelle 8 und das Ritzel 4 eine spielfreie, passgenaue, zentrierte Lagerung, was für einen genauen Zahneingriff mit anderen nicht dargestellten Zahnrädern wichtig ist.

### Bezugszeichen

- 1: Welle-Nabe-Verbindung
- 2: Wellenabschnitt
- 3: Nabe
- 4: Ritzel
- 5: verzahnter Wellenabschnitt
- 6: Zentrierabschnitt
- 7: Zentrierabschnitt
- 8: Ritzelwelle
- 9: Einstich
- 10: Bund
- 11: Bohrung
- 12: Stirnfläche

## Patentansprüche

1. Welle-Nabe-Verbindung (1) zwischen einem Wellenabschnitt (2), der einen mittleren, gezahnten Abschnitt B sowie benachbarte Zentrierabschnitte A, C aufweist, und einer gestuften Bohrung (11) in der Nabe (3), wobei Welle (2) und Nabe (3) in axialer Richtung X gefügt sind und durch den gezahnten Abschnitt B zur Herstellung eines Formschlusses (5) ein Gegenprofil in die Nabe (3) geschnitten ist, wobei der in Fügerichtung vorne liegende Zentrierabschnitt A einen Durchmesser d1 und der gezahnte Abschnitt B sowie der in Fügerichtung hinten liegende Zentrierabschnitt C einen gegenüber d1 größeren Durchmesser d2 aufweisen, **dadurch gekennzeichnet, dass** die Bohrung (11) nur zwei benachbarte Bohrungsabschnitte I, II mit unterschiedlichen Durchmessern D1 und D2 aufweist, dass der Durchmesser d1 im Abschnitt A mit dem Durchmesser D1 sowie der Durchmesser d2 im Abschnitt C mit dem Durchmesser D2 jeweils eine Fügepassung und der Durchmesser d2 im Abschnitt B mit dem Durchmesser D1 den Formschluss (5) bilden.

2. Welle-Nabe-Verbindung nach Anspruch 1, **dadurch gekennzeichnet, dass** zwischen den Abschnitten A und B ein weiterer Abschnitt D angeordnet ist, der einen gegenüber dem Durchmesser d1 geringeren Durchmesser d3 aufweist.

3. welle-Nabe-Verbindung nach Anspruch 2, **dadurch gekennzeichnet, dass** der verzahnte Abschnitt B eine Rändelverzahnung (5) mit einem Fußkreisdurchmesser dF aufweist und dass d3 ≤ dF ist.

4. Welle-Nabe-Verbindung nach Anspruch 1 oder 2 oder 3, **dadurch gekennzeichnet, dass** der Zentrierabschnitt C in einen Wellenbund (10) übergeht, der an einer Stirnfläche (12) der Nabe (3) zur Anlage kommt.

## Claims

1. Shaft/hub connection (1) between a shaft portion (2), which comprises a middle, toothed portion B as well as adjacent centring portions A, C, and a stepped bore (11) in the hub (3), wherein shaft (2) and hub (3) are jointed in axial direction X and by means of the toothed portion B a counterpart profile is cut into the hub (3) to establish a form closure (5), wherein the - in jointing direction - front centring portion A has a diameter d1 and the toothed portion B as well as the - in jointing direction - rear centring portion C has a diameter d2 that is larger than d1, **characterized in that** the bore (11) comprises only two adjacent bore portions I, II of differing diameters D1 and D2, that the diameter d1 in the portion A together with the diameter D1 and the diameter d2 in the portion C together with the diameter D2 form in each case a jointing fit and the diameter d2 in the portion B together with the diameter D1 forms the form closure (5).

2. Shaft/hub connection according to claim 1, **characterized in that** disposed between the portions A and B is a further portion D, which has a diameter d3 that is smaller than the diameter d1.

3. Shaft/hub connection according to claim 2, **characterized in that** the toothed portion B has knurled teeth (5) with a root diameter dF and that d3 ≤ dF.

4. Shaft/hub connection according to claim 1 or 2 or 3, **characterized in that** the centring portion C verges into a shaft collar (10), which comes into abutment with an end face (12) of the hub (3).

## Revendications

1. Assemblage arbre-moyeu (1) réalisé entre un segment d'arbre (2) qui comporte un segment central denté B ainsi que des segments de centrage adjacents A, C, et un perçage étagé (11) formé dans le moyeu (3), dans lequel l'arbre (2) et le moyeu (3) sont aboutés dans la direction axiale X et un contre-profil est taillé dans le moyeu (3) par le segment denté (B) pour établir une liaison par complémentarité de forme (5), et dans lequel le segment de centrage A, qui se trouve en avant dans le sens de l'aboutement, a un diamètre d1 et le segment denté B ainsi que le segment de centrage C, situés en arrière dans le sens de l'aboutement, ont un diamètre d2 supérieur à d1, **caractérisé en ce que** le perçage (11) comporte seulement deux segments de perçage adjacents 1, Il ayant des diamètres différents D1 et D2, **en ce que** le diamètre d1 du segment A forme un ajustement de joint avec le diamètre D1, de même que le diamètre d2 du segment C avec le diamètre D2, et le diamètre d2 du segment B forme la liaison par complémentarité de forme (5) avec le diamètre D1.

2. Assemblage arbre-moyeu selon la revendication 1, **caractérisé en ce que**, entre les segments A et B, se trouve un autre segment D qui a un diamètre d3 inférieur au diamètre d1.

3. Assemblage arbre-moyeu selon la revendication 2, **caractérisé en ce que** le segment denté B comporte une denture moletée (5) ayant un diamètre de pied dF et **en ce que** d3 ≤ dF.

4. Assemblage arbre-moyeu selon la revendication 1, 2 ou 3, **caractérisé en ce que** le segment de centrage C se raccorde à un collet d'arbre (10) qui vient en appui contre une surface frontale (12) du moyeu (3).
